# EUROPÄISCHE PATENTSCHRIFT

(11) **EP 0 956 512 B1**
(45) Veröffentlichungstag und Bekanntmachung des Hinweises auf die Patenterteilung: **05.09.2001**
(21) Anmeldenummer: 98909284.6
(22) Anmeldetag: 26.01.1998
(51) Int. Cl.: G01S 7/35

(54) **RADAR-ABSTANDSMESSER**
RADAR DISTANCE METER
TELEMETRE RADAR

(30) Priorität: 29.01.1997 DE 19703237
(43) Veröffentlichungstag der Anmeldung: 17.11.1999
(73) Patentinhaber: Infineon Technologies AG, 81669 München (DE)
(72) Erfinder: HEIDE, Patric, D-85579 Neubiberg (DE); NALEZINSKI, Martin, D-80803 München (DE)
(74) Vertreter: Zedlitz, Peter, Dipl.-Inf.
(86) Internationale Anmeldenummer: DE9800230
(87) Internationale Veröffentlichungsnummer: WO9834129

(56) Entgegenhaltungen:
- EP-A- 0 527 443
- SAITO T ET AL: "AN FM-CW RADAR MODULE WITH FRONT-END SWITCHING HETERODYNE RECEIVER" INTERNATIONAL MICROWAVE SYMPOSIUM DIGEST (MTT-S), ALBUQUERQUE, JUNE 1 - 5, 1992, Bd. VOL. 2, Nr. -, 1.Juni 1992, REID D W, Seiten 713-716, XP000343419

## Beschreibung

Die vorliegende Erfindung betrifft einen Nahbereichs-Radar-Distanzsensor unter Verwendung von Mikrowellensignalen.

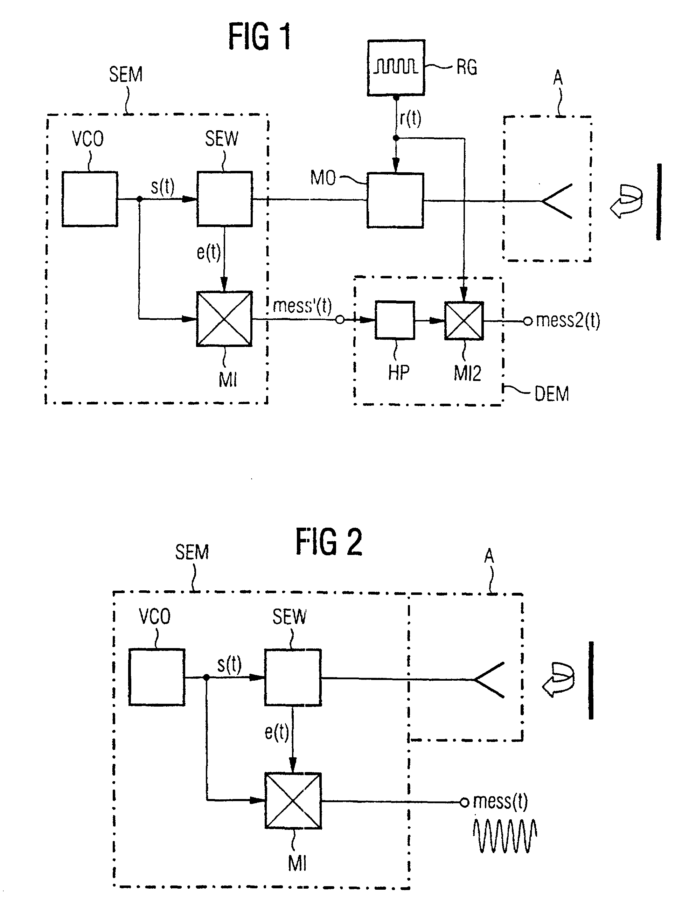

Eine Grundaufgabe der Sensorik ist die berührungslose, präzise Messung von Abständen. Mikrowellen-Radar-Sensoren bieten aufgrund ihrer Robustheit und Zuverlässigkeit insbesondere unter erschwerten Einsatzbedingungen im Vergleich zu anderen Sensoren, die mit Ultraschall oder optischen Verfahren arbeiten, entscheidende Vorteile. Mikrowellen-Radar-Sensoren sind daher geeignet für vielfältige Anwendungen, wie z. B. zur berührungslosen Messung von Entfernung und Geschwindigkeit in der Automatisierungstechnik oder in der Automobiltechnik. Es sind eine Vielzahl von Abstandsmessern nach dem Radarprinzip bekannt und in Lehrbüchern beschrieben. Eine besonders bevorzugte Ausführung arbeitet nach dem FMCW-Prinzip (Frequency Modulated Continuous Wave). Ein Beispiel für einen derartigen Radar-Abstandsmesser ist im Schema in Figur 2 dargestellt. Der Sensor strahlt über die Antenne A ein vorzugsweise linear frequenzmoduliertes Sendesignal s(t) ab, das von einem elektronisch durchstimmbaren Mikrowellenoszillator VCO geliefert wird. Das von der Antenne empfangene Empfangssignal e(t) ist entsprechend der Laufzeit zum Meßobjekt und zurück zeitverzögert gegenüber dem Sendesignal und besitzt gegenüber diesem eine andere, laufzeitabhängige Augenblicksfrequenz. Eine Trennung zwischen dem Sendesignal und dem Empfangssignal wird in diesem angegebenen Beispiel durch eine Sende-/Empfangsweiche SEW bewirkt. Eine solche Sende-/Empfangsweiche kann z. B. durch einen Zirkulator gebildet sein. Eine Alternative ist die Verwendung getrennter Antennen für das Senden und Empfangen (Bistatisches Radarsystem). Das Meßsignal mess(t) wird durch Mischen des Sendesignales s(t) und des Empfangssignales e(t) z. B. in einem Mischer MI erzeugt und entspricht dem Produkt aus Sendesignal und Empfangssignal. Das beim Mischvorgang entstehende Meßsignal mess(t) besitzt als Frequenz die Differenzfrequenz zwischen dem Sendesignal s(t) und dem Empfangssignal e(t). Diese Frequenz (bzw. der Phasenhub) des Meßsignals mess(t) ist bei einem solchen Sensor proportional zum Abstand.

In der Praxis besitzen derartige Abstandsmesser technisch bedingte Schwächen im Nahbereich, d. h. für sehr kurze zu messende Abstände. Aufgrund unvermeidbaren Übersprechens wegen der nicht idealen Trennung von Sende- und Empfangssignal (e(t) enthält Anteile von s(t)), Stör-/Mehrfachreflexionen innerhalb des Sensors, Rückwirkungen der Frequenzmodulation auf die Komponenten des Sensors und niederfrequenten Amplituden-/Phasenrauschens der Sensorkomponenten ist die Empfindlichkeit derartiger Sensoren im Nahbereich stark eingeschränkt, d. h. die internen Störsignale des Sensors überlagern ein von einem Meßobjekt im Nahbereich verursachtes Nutzsignal so stark, daß das Meßsignal keine brauchbare Entfernungsinformation liefert. In der US 5,337,052 ist ein Radarsensor beschrieben, der phasenmodulierte Mikrowellen verwendet und dafür vorgesehen ist, das Vorhandensein eines Meßobjektes in einem bestimmten Abstandsbereich festzustellen. Durch einen besonderen digitalen Code der Phasenmodulation wird vorhandenes Rauschen aus der Messung eliminiert.

In der DE 195 33 125 C1 ist eine Vorrichtung zur Abstandsmessung beschrieben, bei der zur Verbesserung der Abstandsmeßgenauigkeit im Nahbereich eine Laufzeitleitung als Verzögerungselement verwendet wird. Ein frequenzmoduliertes Signal wird mittels eines weiteren Mikrowellensignales auf eine hohe Trägerfrequenz des Sendesignales umgesetzt, und das Empfangssignal wird mit dieser Frequenz demoduliert. Das verzögerte-Signal wird mit dem frequenzmodulierten Mikrowellensignal zu einem Meßsignal gemischt.

In der WO 83/0283 ist ein Dauerstrich-Radargerät mit Zwischenfrequenzbildung beschrieben, bei dem ein Überlagerungsoszillator dafür vorgesehen ist, das Sendesignal und das Empfangssignal vor der Demodulation auf eine Zwischenfrequenz zu mischen. Damit soll die Empfindlichkeit des Radargerätes gesteigert werden.

Ein Radarsystem nach dem Oberbegriff von Anspruch 1 ist aus der EP 0 527 443 bekannt.

Aufgabe der vorliegenden Erfindung ist es, einen Radar-Abstandsmesser anzugeben, der eine zuverlässige Messung auch im Nahbereich, bei geringem technischem Aufwand ermöglicht.

Diese Aufgabe wird mit der Vorrichtung zur Abstandsmessung mit den Merkmalen des Anspruches 1 gelöst. Weitere Ausgestaltungen ergeben sich aus den abhängigen Ansprüchen.

Bei der erfindungsgemäßen Anordnung wird ein Mikrowellen-Radar, das nach dem eingangs beschriebenen Prinzip arbeitet, verwendet. Eine zusätzliche Modulation des für die Aussendung vorgesehenen Mikrowellensignals oder des Empfangssignals ermöglicht es, in einer dem Empfangsmischer MI nachgeschalteten Demodulations- und Filtereinheit das Nutzsignal von den Störsignalanteilen zu trennen. Zu diesem Zweck wird in der in Figur 2 dargestellten Anordnung vor der Antenne eine Modulationseinheit vorgesehen, um das abzustrahlende Signal geeignet zu modulieren. Die von den Komponenten des Radarsensors selbst hervorgerufenen unerwünschten Störsignale werden nicht moduliert und können daher durch Filterung von dem Nutzsignal getrennt werden. Diese Trennung erfolgt vor der Demodulation durch Hochpaßfilterung und/oder nach der Demodulation durch Tiefpaßfilterung.
- Figur 1: zeigt eine erfindungsgemäße Anordnung, die im folgenden näher beschrieben wird.
- Figur 2: zeigt einen Abstandsmesser nach dem Stand der Technik.
- Figuren 3 bis 7: zeigen Diagramme zur Erläuterung der Funktionsweise der erfindungsgemäßen Vorrichtung.
- Figuren 8 und 9: zeigen alternative Ausgestaltungen der vorgesehenen Demodulations- und Filtereinheit.

Bei der Anordnung der Figur 1 besteht die Modulationseinheit aus einem Modulator MO, in den ein für die Modulation vorgesehenes Modulationssignal von einem Generator RG eingespeist wird. In dieser einfachen Anordnung eines monostatischen Radarsystems ist nur eine Antenne für Senden und Empfangen vorgesehen. Der Modulator ist daher als bidirektionaler Modulator ausgebildet. Die Modulation des Mikrowellensignales erfolgt hier vor dem Aussenden und nach dem Empfangen. Statt dessen können getrennte Signalwege vorgesehen sein, so daß die Modulation nur vor dem Aussenden oder nur nach dem Empfangen des Mikrowellensignales erfolgt. Insbesondere kann eine solche Anordnung mit separaten Signalwegen für Senden und Empfangen als bistatisches Radarsystem ausgebildet sein, bei dem getrennte Antennen für Senden und Empfangen eingesetzt werden. Unter der Antenne A ist daher im folgenden entweder eine einzelne Antenne wie in dem beschriebenen Beispiel oder eine Antennenanordnung mit getrennten Sende- und Empfangsantennen zu verstehen.

Die erfindungsgemäße Anordnung zerfällt daher in ein in Figur 1 links im Schema dargestelltes Sende-/Empfangsmodul SEM, die erwähnte Modulationseinheit MO, die Antennenanordnung A und eine Demodulations- und Filtereinheit, die dafür vorgesehen ist, die unerwünschten Störsignalanteile aus dem resultierenden rohen Messsignal mess'(t) auszufiltern und durch geeignete Umsetzung auf eine niedrige Frequenz das für die Auswertung vorgesehene Meßsignal zu erzeugen.

Der Sende-/Empfangsmodul SEM besteht in dem Ausführungsbeispiel der Figur 1 aus dem Oszillator VCO, der vorzugsweise elektronisch auf eine bestimmte Mikrowellenfrequenz eingestellt (abgestimmt) werden kann. Außerdem ist eine Sende-/Empfangsweiche SEW vorgesehen, die wie eingangs beschrieben durch einen Zirkulator oder Richtkoppler gebildet werden kann. Diese Sende-/Empfangsweiche ist dafür vorgesehen, das von dem Oszillator VCO gelieferte Mikrowellensignal zur Antenne zu leiten und von einem Mischer MI abzublocken und ein von der Antenne kommendes Reflexionssignal e(t) zu dem Mischer MI zu leiten, in dem dieses reflektierte Signal mit dem von dem Oszillator gelieferten Signal s(t) gemischt, d. h. derart multipliziert wird, daß eine Demodulation der durch die Laufzeit des reflektierten Signales bewirkten Frequenzdifferenz erfolgt. Diese Demodulation kann durch die in Figur 1 eingezeichneten einfachen Komponenten vorgenommen werden. Es ist aber möglich, im Rahmen der Erfindung den Sende-/Empfangsmodul durch weitere Komponenten zu ergänzen oder zu ersetzen, die bei Anordnungen entsprechend Figur 2 für Radar-Abstandsmesser verwendet werden. Das von dem Oszillator VCO erzeugte Sendesignal wird vorzugsweise linear frequenzmoduliert. Typische Werte des Signals sind eine Mittenfrequenz von z. B. 24,1 GHz, ein Frequenzhub von 200 MHz und ein Zeitintervall für die Veränderung der Frequenz zwischen den Extremwerten (Sweep) von 1 ms. Für diese Modulation ist im Sende-/Empfangsmodul eine weitere Komponente vorgesehen. Es kann auch eine Kompensation einer nicht ideal vorgenommenen Modulation vorgesehen sein.

Unabhängig von der genauen Ausgestaltung des Sende-/Empfangsmoduls und der Antennenanordnung befindet sich dazwischen die Modulationseinheit, die z. B. wie in Figur 1 dargestellt durch einen Modulator MO und einen Generator RG gebildet sein kann. Dieser Generator RG liefert z. B. ein rechteckförmiges Modulationssignal r(t) (typische Frequenz 1 bis 10 MHz). Das Radarsignal und somit auch das Meßsignal wird daher entsprechend moduliert. Grundsätzlich können unterschiedliche Modulationsverfahren an dieser Stelle angewendet werden, eine rechteckförmige Phasenmodulation mit einem Phasenhub von 180° (für Hin- und Rückweg) ist aber aus Gründen einer besseren Empfindlichkeit vorzuziehen. Eine Amplituden- oder Frequenzmodulation mit einer ausreichend hohen Frequenz ist auch verwendbar.

Nach dem Aussenden des Radarsignales und der Reflexion an dem in Figur 1 rechts durch einen senkrechten Balken dargestellten Meßobjekt - durch den gebogenen Pfeil symbolisiert - wird das reflektierte Radarsignal e(t) dem Sende-/Empfangsmodul zugeführt und dort wie herkömmlich zu einem rohen Meßsignal mess' (t) weiterverarbeitet. Das geschieht in dem beschriebenen Beispiel durch das Mischen mit dem von dem Oszillator VCO gelieferten Signal s(t) in dem Mischer MI. In der nachgeschalteten Demodulations- und Filtereinheit wird der niederfrequente Anteil des Meßsignales herausgefiltert, d. h. entfernt. Das geschieht z. B. mit einem Hochpaßfilter HP, dessen Grenzfrequenz kleiner ist: als die kleinste Frequenz des von dem Generator RG gelieferten Modulationssignales. Am Ausgang des Hochpaßfilters HP liegt daher ein Meßsignal an, aus dem die niederfrequenten Störanteile des Radarsensors eliminiert sind. Dieses Meßsignal kann dann z. B. mit einem zweiten Mischer MI2 durch Multiplikation mit dem von dem Generator RG gelieferten Modulationssignal r(t) zu einem Meßsignal mess2(t) demoduliert werden. Aus diesem Meßsignal kann dann beispielsweise mit Hilfe eines Digitalrechners die präzise Entfernung zum Meßobjekt berechnet werden.

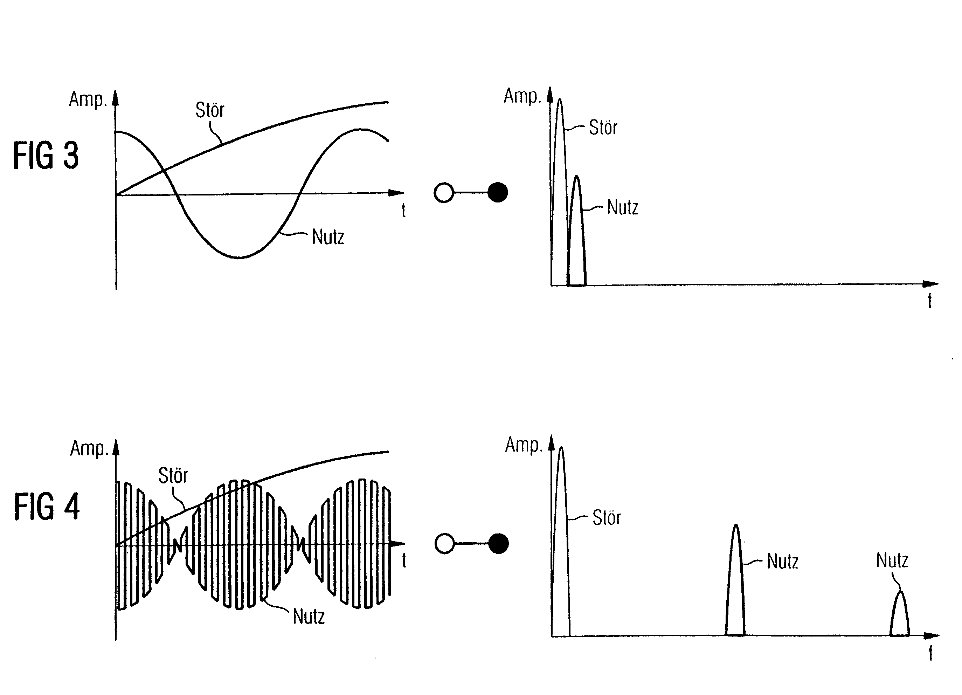

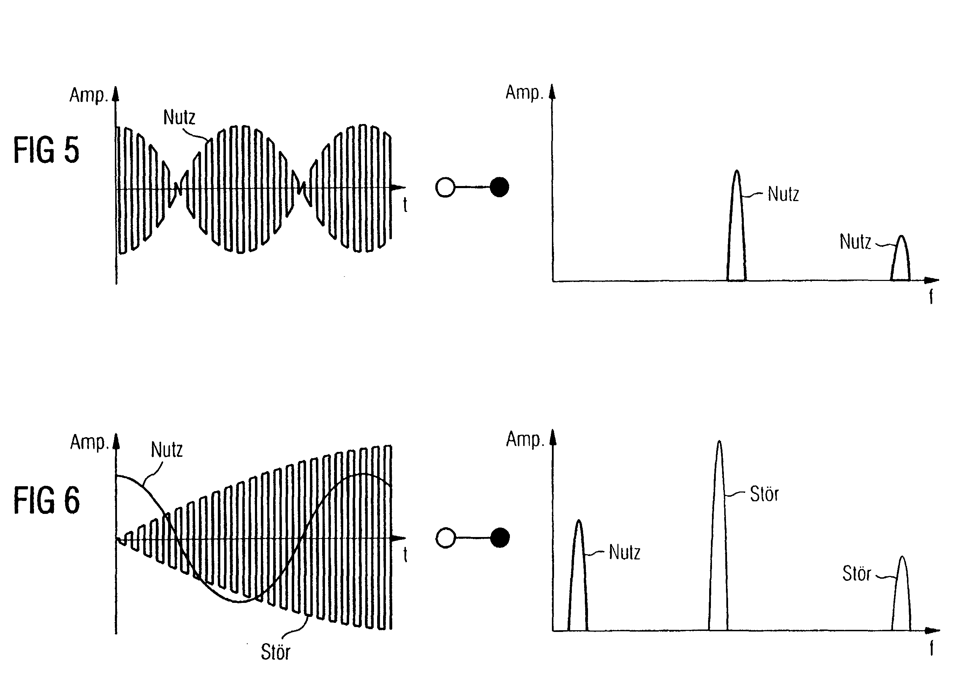

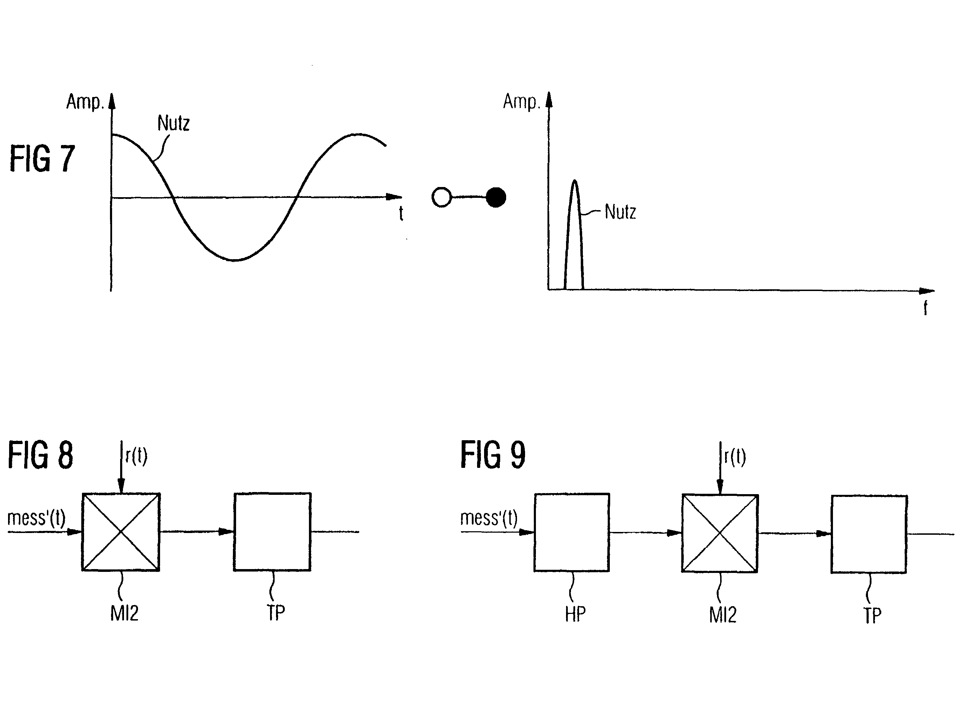

In den Figuren 3 bis 7 sind Diagramme dargestellt, die die beschriebene Funktionsweise der erfindungsgemäßen Vorrichtung erläutern. Auf der linken Seite ist jeweils ein Diagramm dargestellt, in dem das Nutzsignal und das Störsignal über der Zeit aufgetragen sind. In dem Diagramm auf der jeweils rechten Seite sind die Amplituden des Nutzsignales und des Störsignales über der Frequenz aufgetragen. Der Übergang von einer Darstellung in die andere geschieht durch Fouriertransformation. Bei Fehlen einer weiteren Modulation sind die Frequenzen des Nutzsignales und auftretender Störsignale dicht benachbart, wie in Figur 3 dargestellt ist. In Figur 4 ist im linken Diagramm das Nutzsignal mit der rechteckförmigen Phasenmodulation mit einem Phasenhub von 180° dargestellt. Durch die hohe zusätzliche Modulationsfrequenz sind die Frequenzanteile des Nutzsignales deutlich höher als die Frequenzen der Störsignale, wie in dem rechten Diagramm von Figur 4 im Schema dargestellt ist. In der Demodulations- und Filtereinheit DEM kann daher der niederfrequente Anteil in dem Hochpaßfilter HP eliminiert werden (s. Figuren 1 und 5). In dem zweiten Mischer MI2 wird durch Multiplikation mit dem Modulationssignal r(t). das Meßsignal erzeugt (s. Figur 7).

Alternativ kann das rohe Meßsignal mess'(t) zuerst im Mischer MI2 mit dem Modulationssignal r(t) moduliert werden. Dabei wird das Nutzsignal zum eigentlichen Meßsignal demoduliert, das niederfrequente Störsignal wird dagegen auf die Grundfrequenz des Modulationssignals moduliert (Figur 6) und durch anschließende Tiefpaßfilterung entfernt (Figur 7). In Figur 8 ist eine Demodulations- und Filtereinheit für diese alternative Ausgestaltung der Vorrichtung dargestellt. Das von dem ersten Mischer MI gelieferte rohe Meßsignal mess'(t) wird hierbei direkt dem zweiten Mischer MI2 zugeführt und nach dem Mischen mit dem Modulationssignal r(t) einem Tieffaßfilter TP zugeleitet. Als weitere Alternative können sowohl eine Hochpaßfilterung vor dem zweiten Mischer als auch eine Tiefpaßfilterung nach dem zweiten Mischer entsprechend Figur 9 vorgesehen werden.

## Patentansprüche

1. Vorrichtung zur Abstandsmessung,
- bei der eine Signalquelle (VCO) vorhanden ist, die dafür vorgesehen ist, ein frequenzmoduliertes Mikrowellensignal (s(t)) zu erzeugen,
- bei der eine Antennenanordnung (A) vorhanden ist, die dafür vorgesehen ist, das Mikrowellensignal auszusenden und ein an einem Objekt reflektiertes Signal zu empfangen,
- bei der eine Modulationseinheit (MO, RG) vorhanden ist, die dafür vorgesehen ist, das zur Aussendung vorgesehene Mikrowellensignal und/oder das reflektierte Signal mittels eines Modulationssignals zusätzlich zu modulieren,
- bei der ein Mischer (MI) vorhanden ist, der dafür vorgesehen ist, ein Mischprodukt aus dem von der Signalquelle erzeugten Mikrowellensignal (s(t)) und dem reflektierten und von der Modulationseinheit modulierten Signal zu erzeugen, und
- bei der eine Demodulations- und Filtereinheit (DEM) vorhanden ist, die dafür vorgesehen ist, einen Anteil dieses Mischproduktes, der unterhalb der niedrigsten Frequenz des Modulationssignals liegt, durch ein Filter zu entfernen und einen restlichen Anteil durch Mischen mit dem Modulationssignal zu einem Meßsignal (mess2(t)) zu verarbeiten,
**gekennzeichnet dadurch,** daß
die Antennenanordnung aus einer Antenne besteht, die für Senden und Empfangen vorgesehen ist,
eine Sende-/Empfangsweiche (SEW) vorhanden ist, die dafür vorgesehen ist, das Mikrowellensignal (s(t)) von der Signalquelle zur Antenne zu leiten und das reflektierte Signal von der Antenne zu der Demodulations- und Filtereinheit zu leiten, und
die Modulationseinheit einen bidirektionalen Modulator (MO) umfaßt, der zwischen dieser Sende-/Empfangsweiche und der Antenne angeordnet ist.

2. Vorrichtung nach Anspruch 1, bei der das Modulationssignal eine Phasenmodulation mit einem Phasenhub von 180° bewirkt.

3. Vorrichtung nach Anspruch 1 oder 2,
- bei der die Demodulations- und Filtereinheit ein Hochpaßfilter (HP) und einen weiteren Mischer (MI2) umfaßt,
- bei der das Hochpaßfilter zwischen dem Mischer (MI) und diesem weiteren Mischer (MI2) angeordnet ist und
- bei der dieser weitere Mischer so angeordnet ist, daß er ein von dem Hochpaßfilter kommendes Signal mit dem Modulationssignal mischen kann.

4. Vorrichtung nach Anspruch 1 oder 2,
- bei der die Demodulations- und Filtereinheit ein Tiefpaßfilter (TP) und einen weiteren Mischer (MI2) umfaßt,
- bei der dieser weitere Mischer (MI2) so angeordnet ist, daß er ein von dem Mischer (MI) kommendes Signal mit dem Modulationssignal mischen kann, und
- bei der das von dem weiteren Mischer gelieferte Signal dem Tiefpaßfilter zugeführt wird.

## Claims

1. Apparatus for range measurement,
- in which there is a signal source (VCO) which is provided for producing a frequency-modulated microwave signal (s(t)),
- in which there is an antenna arrangement (A) which is provided for transmitting the microwave signal and for receiving a signal reflected on an object,
- in which there is a modulation unit (MO, RG) which is provided for additionally modulating the microwave signal provided for transmission and/or the reflected signal by means of a modulation signal,
- in which there is a mixer (MI) which is provided for producing a mixed product from the microwave signal (s(t)) produced by the signal source and the reflected signal modulated by the modulation unit, and
- in which there is a demodulation and filter unit (DEM) which is provided for removing, by means of a filter, a component of this mixed product which is below the lowest frequency of the modulation signal, and for processing a remaining component by mixing it with the modulation signal to form a measurement signal (mess2(t)),
**characterized in that**
the antenna arrangement has an antenna which is provided for transmission and reception,
there is a transmission/reception duplexer (SEW) which is provided for carrying the microwave signal (s(t)) from the signal source to the antenna and for passing the reflected signal from the antenna to the demodulation and filter unit, and
the modulation unit has a bidirectional modulator (MO) which is arranged between this transmission/reception duplexer and the antenna.

2. Apparatus according to Claim 1, in which the modulation signal produces phase modulation with a phase shift of 180°.

3. Apparatus according to Claim 1 or 2,
- in which the demodulation and filter unit has a high-pass filter (HP) and a further mixer (MI2),
- in which the high-pass filter is arranged between the mixer (MI) and this further mixer (MI2), and
- in which this further mixer is arranged such that it can mix a signal coming from the high-pass filter with the modulation signal.

4. Apparatus according to Claim 1 or 2,
- in which the demodulation and filter unit has a low-pass filter (TP) and a further mixer (MI2),
- in which this further mixer (MI2) is arranged such that it can mix a signal coming from the mixer (MI) with the modulation signal, and
- in which the signal supplied from the further mixer is supplied to the low-pass filter.

## Revendications

1. Dispositif de télémétrie
- dans lequel une source de signal (VCO) est prévue pour produire un signal de micro-ondes (s(t)) à modulation de fréquence,
- dans lequel un dispositif d'antenne (A) est prévu pour émettre le signal de micro-ondes et pour recevoir un signal réfléchi sur un objet,
- dans lequel une unité de modulation (MO, RG) est prévue pour moduler en plus au moyen d'un signal de modulation le signal de micro-ondes prévu pour l'émission et/ou le signal réfléchi,
- dans lequel un mélangeur (MI) est prévu pour produire un produit mélangé à partir du signal de micro-ondes (s(t)) produit par la source de signal et du signal réfléchi et modulé par l'unité de modulation et
- dans lequel une unité de démodulation et de filtrage (DEM) est prévue pour éliminer au moyen d'un filtre une composante de ce produit mélangé qui est inférieure à la plus petite fréquence du signal de modulation et pour traiter une composante restante par un mélange avec le signal de modulation afin de donner un signal de mesure (mess2(t)),
caractérisé par le fait que
le dispositif d'antenne est constitué d'une antenne qui est prévue pour l'émission et pour la réception,
un commutateur émission-réception (SEW) est prévu pour conduire le signal de micro-ondes (s(t)) de la source de signal à l'antenne et pour conduire le signal réfléchi de l'antenne à l'unité de démodulation et de filtrage, et
l'unité de modulation comprend un modulateur bidirectionnel (MO) qui est monté entre ce commutateur émission-réception et l'antenne.

2. Dispositif selon la revendication 1,
dans lequel le signal de modulation provoque une modulation de phase avec un décalage de phase de 180°.

3. Dispositif selon la revendication 1 ou 2,
- dans lequel l'unité de démodulation et de filtrage comprend un filtre passe-haut (HP) et un autre mélangeur (MI2),
- dans lequel le filtre passe-haut est agencé entre le mélangeur (MI) et cet autre mélangeur (MI2) et
- dans lequel cet autre mélangeur est agencé de telle sorte qu'il peut mélanger un signal arrivant du filtre passe-haut et le signal de modulation.

4. Dispositif selon la revendication 1 ou 2,
- dans lequel l'unité de démodulation et de filtrage comprend un filtre passe-bas (TP) et un autre mélangeur (MI2),
- dans lequel cet autre mélangeur (MI2) est agencé de telle sorte qu'il peut mélanger un signal arrivant du mélangeur (MI) et le signal de modulation, et
- dans lequel le signal fourni par l'autre mélangeur est envoyé au filtre passe-bas.
